# FASCICULE DE BREVET EUROPEEN

(11) **EP 0 406 750 B1**
(45) Date de publication et mention de la délivrance du brevet: **19.01.1994**
(21) Numéro de dépôt: 90112565.8
(22) Date de dépôt: 02.07.1990
(51) Int. Cl.: E05F 1/12, A47J 36/12

(54) **Charnière pour couvercle de cuve d'appareil de cuisson**
Scharnier für den Behälterdeckel eines Kochgerätes
Coverhinge for a cooking appliance vessel

(30) Priorité: 07.07.1989 FR 8909211
(43) Date de publication de la demande: 09.01.1991
(73) Titulaire: MOULINEX, F-93170 Bagnolet (FR)
(72) Inventeur: Jacob, Robert Charles Jacques, Moulinex, F-14123 Ifs (FR); Giffard, Sylvain André Bernard, Moulinex, F-14123 Ifs (FR)
(74) Mandataire: May, Hans Ulrich, Dr.

(56) Documents cités:
- CH-A- 183 985
- FR-A- 2 393 910
- US-A- 2 203 197

## Description

L'invention se rapporte à une charnière pour couvercle de cuve d'appareil de cuisson, tel que par exemple une friteuse, et comprenant un axe monté horizontalement dans un palier solidaire de la cuve et sur lequel vient pivoter le couvercle, ainsi qu'au moins un ressort à boudin, à spires non jointives, monté concentriquement à l'axe et dont une extrémité dite libre est attachée au couvercle et dont l'autre extrémité dite fixe est liée à la paroi de la cuve de manière à ce que le ressort soit en torsion lorsque le couvercle est maintenu en position de fermeture au moyen d'un verrou solidaire de la cuve, et pratiquement hors torsion lorsque le couvercle occupe une position ouverte après libération du verrou.

Avec une charnière de ce type, connue d'après le brevet US-A- 4 266 527, on constate que lorsque le verrou est libéré, le couvercle est rappelé violemment, sous l'effet du ressort, vers sa position ouverte et provoque en fin de course un choc sur la cuve pouvant entraîner un débordement d'huile.

Pour remédier à cet inconvénient, une solution consiste à équiper ces couvercles de dispositifs de ralentissement ou freinage de leur ouverture comme cela est bien connu par ailleurs dans d'autres applications telles que par exemple les charnières de porte avec freinage du type décrit dans le brevet US-A-2 203 197. Mais ces dispositifs de freinage utilisés pour des couvercles de cuves d'appareils de cuisson ne donnent pas entière satisfaction, car non seulement, ils imposent une trop longue durée d'ouverture du couvercle, mais aussi ils nécessitent des mécanismes complexes et des réglages délicats car leurs caractéristiques mécaniques sont influencées par la haute température régnant dans la cuve de cuisson.

L'invention a notamment pour but de supprimer ces inconvénients et de réaliser une charnière pour couvercle de cuve d'appareil de cuisson du type rappelé ci-dessus qui soit équipée d'un dispositif de freinage simple assurant une bonne sécurité de fonctionnement du couvercle en éliminant tout choc en fin de course de son ouverture.

Selon l'invention, une charnière pour couvercle de cuve d'appareil de cuisson du type décrit précédemment, est plus particulièrement caractérisée en ce qu'elle est équipée d'au moins un dispositif de freinage comportant des première et seconde pièces concentriques disposées concentriquement au ressort, s'appuyant respectivement sur les deux spires d'extrémité du ressort et pourvues d'organes d'accouplement mutuel, la première pièce étant liée en rotation avec l'extrémité libre du ressort et la seconde pièce étant liée avec l'extrémité fixe dudit ressort, lesdits organes d'accouplement mutuel présentant respectivement des portées de profil complémentaire, coopérant par friction amortissant la détente de ressort, disposées transversalement à l'axe et aptes à se dérouler progressivement selon une pente croissante dans le sens de rotation d'ouverture du couvercle et en ce que lesdits organes d'acccouplement mutuel sont aptes à déplacer axialement, au moins dans la course finale du couvercle, l'une des pièces par rapport à l'autre, à l'encontre de la force antagoniste croissante résultant de la compression du ressort par lesdits pièces.

Les caractéristiques et avantages de l'invention ressortiront d'ailleurs de la description qui va suivre, à titre d'exemple, en référence aux dessins annexés dans lesquels:

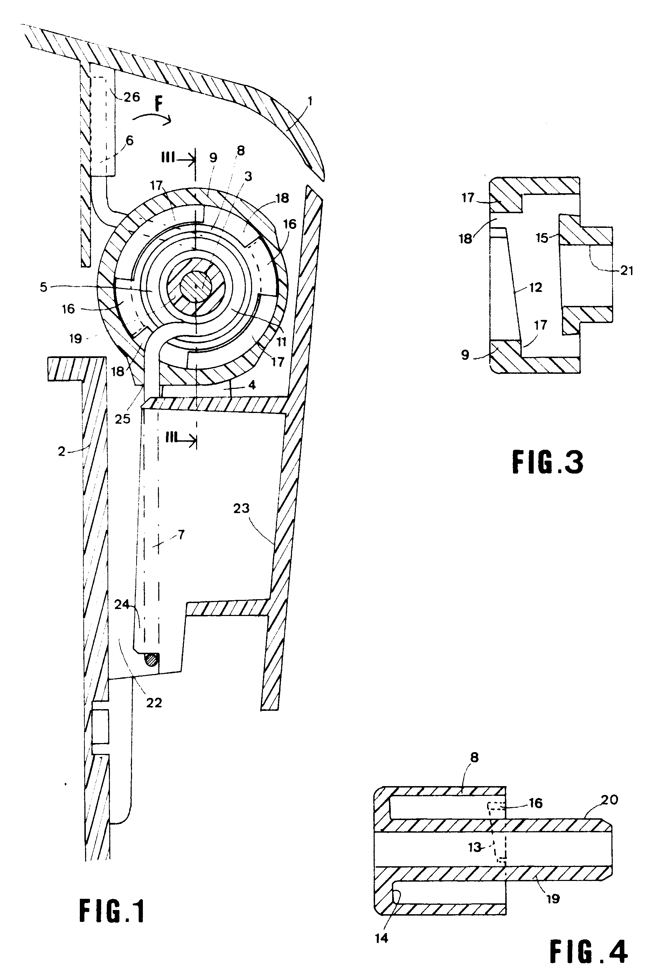

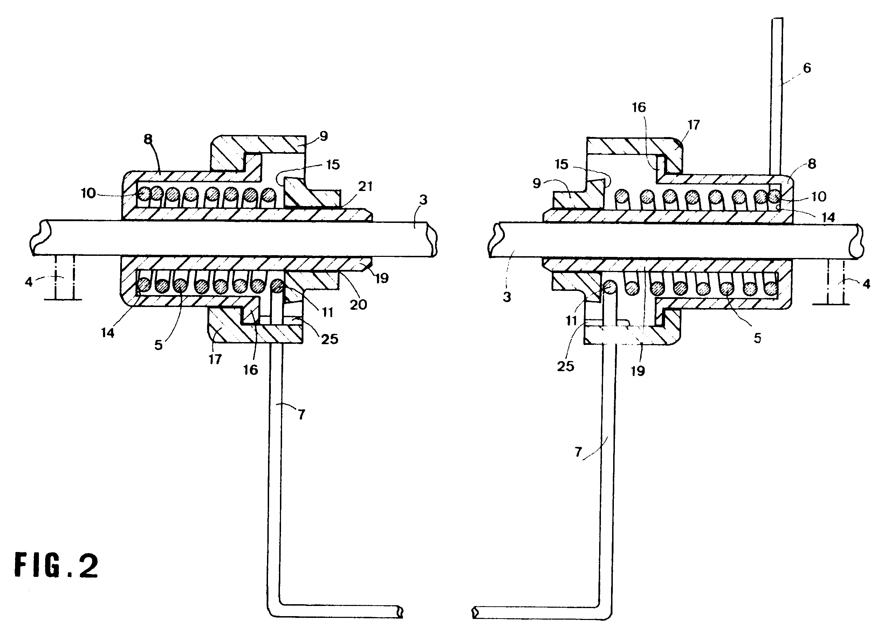

la figure 1 est une vue schématique partielle en coupe verticale d'une cuve de cuisson et de son couvercle équipé d'une charnière selon l'invention; la figure 2 est une vue en coupe verticale de la charnière équipée de deux dispositifs de freinage appliqués respectivement sur les ressorts et illustrant sur la partie gauche le dispositif de freinage couvercle ouvert, et sur la partie droite le dispositif de freinage couvercle fermé ; les figures 3 et 4 représentent, en coupe verticale, selon la ligne III-III de la figure 1, respectivement les second et premier éléments faisant partie du dispositif de freinage de la charnière.

La charnière représentée à la figure 1 est montée entre un couvercle 1 et une cuve 2 d'un appareil de cuisson tel qu'une friteuse électrique et comprend un axe 3 monté horizontalement dans un palier 4 (schématisé notamment en traits interrompus sur la figure 2) solidaire de la cuve et sur lequel vient pivoter le couvercle, ainsi que deux ressorts à boudin 5, du type à spires non jointives, montés distants l'un de l'autre et concentriquement à l'axe 3. Chaque ressort 5 comprend une extrémité 6 dite libre attachée au couvercle 1 et une autre extrémité 7 dite fixe liée à la paroi de la cuve 2 de manière à ce que le ressort 5 soit en torsion lorsque le couvercle est maintenu en position de fermeture au moyen d'un verrou (non représenté) solidaire de la cuve et agencé dans une région opposée à la charnière, et pratiquement hors torsion lorsque le couvercle occupe une position ouverte après libération du verrou (figure 1 et partie droite de la figure 2).

La charnière est équipée d'un dispositif de freinage qui comprend un premier et un second éléments 8 et 9 agencés concentriquement au ressort 5 et s'appuyant respectivement sur les deux spires d'extrémité 10,11, et dont le premier élément 8 est lié en rotation avec l'extrémité libre 6 du ressort, tandis que le second élément 9 est lié à l'extrémité fixe 7 dudit ressort, les deux éléments comprenant des moyens d'accouplement mutuel qui sont aptes à déplacer axialement, au moins dans la course finale du couvercle, l'un des éléments par rapport à l'autre, à l'encontre de la force antagoniste croissante résultant de la compression axiale du ressort 5 par lesdits éléments 8 et 9 et qui comportent à cet effet des portées 12,13 d'entraînement axial et de freinage amortissant la détente du ressort.

Comme on le voit bien sur les figures 2 à 4, les premier et second éléments 8 et 9 sont formés par deux pièces tubulaires concentriques qui comportent chacune un fond 14,15 s'appuyant sur l'une des spires d'extrémité 10,11 du ressort et dont les bords libres portent les moyens d'accouplement mutuel qui comprennent respectivement sur les premier et second éléments (8 et 9), une paire de crochets radiaux 16 dirigés vers l'extérieur et diamétralement opposés par rapport à l'axe 3 et une paire de crans radiaux 17 dirigés vers l'intérieur et également diamétralement opposés par rapport à l'axe 3 et qui viennent s'emboîter les uns sous les autres par leur face adjacente, les deux paires de crans 17 et de crochets 16 portent respectivement sur leur face des cames 12,13 de profil complémentaire et constituant ainsi les portées 12, 13 d'entraînement axial et de freinage.Ces portées 12, 13 sont ainsi disposées transversalement à l'axe 3 et se déroulent axialement selon une pente croissante dans le sens de rotation d'ouverture du couvercle (flèche F). De plus la complémentarité de profil des cames assure une meilleure friction entre les lesdites portées.

Comme on le voit mieux sur la figure 1, les deux crans 17 s'étendent respectivement selon deux secteurs de cercle concentriques à l'axe 3 et les deux crochets 16 s'étendent également selon deux secteurs de cercle concentriques audit axe, les secteurs angulaires 18 compris entre les crans 17 ayant une étendue angulaire supérieure à l'étendue angulaire des crochets 16, de manière à permettre un assemblage par baïonnette des premier et second éléments 8 et 9.

De plus, pour augmenter l'efficacité d'amortissement, les cames 12, 13 s'étendent pratiquement respectivement sur toute la longueur périphérique des secteurs des crans 17 et des crochets 16.

De manière à assurer une plus grande rigidité de l'ensemble formé par le ressort 5 et les premier et second éléments 8 et 9, ainsi que le montage de cet ensemble autour de l'axe 3, l'invention prévoit que le premier élément (8) comporte dans la région centrale de son fond 14 un moyeu axial tubulaire 19 qui est monté autour de l'axe 3 et dont l'extrémité fait saillie de la pièce tubulaire, de manière à constituer par sa face externe un palier 20 pour la seconde pièce tubulaire 9 dont le fond 15 présente à cet effet un orifice central 21.

Pour permettre le montage en automatique de la charnière sur la cuve et pour rendre plus aisé le nettoyage de l'appareil l'invention prévoit, d'une part, que les deux ressorts 5 sont réunis par leur extrémité fixe 7 pour constituer un pied en fil en forme de U qui vient se fixer de façon amovible dans un logement 22 pratiqué entre la paroi externe de la cuve (2) et un support latéral porte-charnière 23, ledit pied venant à cet effet enserrer un bossage 24 porté par la face interne du support 23, tandis que le palier 4 de réception de l'axe 3 est ouvert vers le haut de manière à maintenir ledit axe en traction sur ce palier au moyen du pied en fil 7 qui enserre le bossage 24.

On va maintenant récapituler et préciser ci-après le montage et le fonctionnement de cette charnière. Sur chaque ressort 5 on enfile, d'une part, sur l'extrémité 10 du ressort le premier élément 8 qui se fixe en rotation sur l'extrémité libre 6 de ce ressort qui passe à cet effet dans une échancrure longitudinale non représentée, et d'autre part, sur l'extrémité 11 de ce ressort, le second élément 9 qui se fixe en rotation sur l'extrémité fixe 7 de ce ressort qui passe à cet effet dans une échancrure 25 de l'élément 9. On amène les crochets 16 en regard des secteurs 18, puis par un mouvement de rotation, on réalise un assemblage par baïonnette des crochets 16 sous les crans 17 de manière à enfermer le ressort entre ces deux éléments 8 et 9. On réalise ainsi un sous-ensemble qui se fixe par ses extrémités libres 6 dans des petits logements 26 du couvercle, et par son axe 3 qui s'engage dans des pivots (non représentés) du couvercle. Puis on introduit le pied 7 dans le logement 22 jusqu'à obtenir par déformation élastique son verrouillage automatique sur le bossage 23 et donc en même temps le maintien de l'axe 3 sur le palier 4.

Le couvercle étant en sa position illustrée à la figure 1, on comprend que, dès le déverrouillage de ce couvercle, l'extrémité 6 de chaque ressort est rappelée violemment vers l'arrière (flèche F) et entraîne en rotation le premier élément 8 dont les crochets 16 s'engagent plus avant sous les crans 17 du second élément 9.

Chaque came 13 parcourt donc par rotation la pente correspondante de la came 12 dans le sens croissant de manière à entraîner les éléments 8 et 9 l'un vers l'autre pour comprimer le ressort 5 (partie gauche de la figure 2).

Le ressort 5 oppose alors une force antagoniste croissante qui va à la fois augmenter la friction entre lesdites cames et s'opposer progressivement à la montée de la came 13 jusqu'au sommet de la came 12 provoquant ainsi dans la course finale du couvercle un amortissement pratiquement total de la détente de ce ressort jusqu'à l'amener en son état hors torsion, évitant ainsi le pivotement excessif du couvercle vers l'arrière qui aurait entraîner le renversement de la cuve ou des projections d'huile.

## Revendications

1. Charnière pour couvercle (1) de cuve (2) d'appareil de cuisson, tel que par exemple une friteuse, et comprenant un axe (3) monté horizontalement dans un palier (4) solidaire de la cuve et sur lequel vient pivoter le couvercle (1), ainsi qu'au moins un ressort à boudin (5), à spires non jointes, monté concentriquement à l'axe (3) et dont une extrémité (6) dite libre est attachée au couvercle (1) et dont l'autre extrémité (7) dite fixe est liée à la paroi de la cuve (2) de manière à ce que le ressort (5) soit en torsion lorsque le couvercle (1) est maintenu en position de fermeture au moyen d'un verrou solidaire de la cuve (2) et pratiquement hors torsion lorsque le couvercle occupe une position ouverte après libération du verrou,
**caractérisée en ce que** la charnière est équipée d'au moins un dispositif de freinage comportant des première (8) et seconde (9) pièces concentriques disposées concentriquement au ressort (5), s'appuyant respectivement sur les deux spires d'extrémité (10; 11) du ressort et pourvues d'organes d'accouplement mutuel (16; 17), la première pièce (8) étant liée en rotation avec l'extrémité libre (6) du ressort et la seconde pièce (9) étant liée avec l'extrémité fixe (7) dudit ressort, lesdits organes d'accouplement mutuel présentant respectivement des portées (12;13) de profil complémentaire, coopérant par friction amortissant la détente de ressort (5), disposées transversalement à l'axe (3) et aptes à se dérouler progressivement selon une pente croissante dans le sens de rotation d'ouverture du couvercle et en ce que lesdits organes d'acccouplement mutuel (16; 17) sont aptes à déplacer axialement, au moins dans la course finale du couvercle (1) l'une des pièces par rapport à l'autre, à l'encontre de la force antagoniste croissante résultant de la compression du ressort (5) par lesdits pièces (8; 9).

2. Charnière selon la revendication 1,
**caractérisée en ce que** les première (8) et seconde (9) pièces sont respectivement deux pièces tubulaires qui comportent chacune un fond (14;15) s'appuyant sur l'une des spires d'extrémité (10;11) du ressort et dont les bords libres portent les organes d'accouplement mutuel qui comprennent respectivement sur les première (8) et seconde (9) pièces une paire de crochets radiaux (16) dirigés vers l'extérieur et diamétralement opposés par rapport à l'axe (3) et une paire de crans radiaux (17) dirigés vers l'intérieur et également diamétralement opposés par rapport à l'axe (3) et qui viennent s'emboîter les uns sous les autres par leur face adjacente, et en ce que les portées (12;13) sont constituées par des cames formées respectivement sur l'une au moins desdites deux paires de crans (17) et de crochets (16).

3. Charnière selon la revendication 2,
**caractérisée en ce que** les deux crans (17) s'étendent respectivement selon deux secteurs de cercle concentriques à l'axe (3) et les deux crochets (16) s'étendent également selon deux secteurs de cercle concentriques audit axe, les secteurs angulaires (18) compris entre les crans (17) ayant une étendue angulaire supérieure à l'étendue angulaire des crochets (16), de manière à permettre un assemblage par baïonnette des première (8) et seconde (9) pièces.

4. Charnière selon la revendication 2 ou 3,
**caractérisée en ce que** en ce que les deux paires de crans (17) et de crochets (16) portent respectivement sur leur face adjacente les cames (12;13).

5. Charnière selon l'une quelconque des revendications 2 à 4,
**caractérisée en ce que** la première pièce tubulaire (8) comporte dans la région centrale de son fond un moyeu axial tubulaire (19) qui est monté autour de l'axe (3) et dont l'extrémité fait saillie, de manière à constituer par sa face externe un palier (20) pour la seconde pièce tubulaire (9) dont le fond (15) présente un orifice central (21) de passage du moyeu (19).

6. Charnière selon l'une quelconque des revendications précédentes,
**caractérisée en ce qu**'elle comporte deux ressorts (5) distants l'un de l'autre et réunis par leur extrémité fixe (7) pour constituer un pied en fil en forme de U qui vient se fixer de façon amovible dans un logement (22) pratiqué entre la paroi externe de la cuve (2) et un support latéral porte-charnière (23), ledit pied venant enserrer un bossage (24) porté par la face interne du support (23).

7. Charnière selon la revendication 6,
**caractérisée en ce que** le palier (4) de réception de l'axe (3) est ouvert vers le haut de manière à maintenir ledit axe en traction sur ce palier au moyen du pied en fil (7) qui enserre le bossage (24).

## Claims

1. A hinge for a lid (1) of a pan (2) of a cooking appliance, such as for example a deep fat frier, comprising a pin (3) mounted horizontally in a bearing (4) integral with the pan and on which the lid (1) comes to pivot, and also at least one helical spring (5), having non-contiguous coils, mounted concentrically to the pin (3) and one end (6) of which, known as the free end, is attached to the lid (1) and the other end (7) of which, known as the fixed end, is connected to the wall of the pan (2) so that the spring (5) is subject to torsion when the lid (1) is kept in the closed position by means of a bolt integral with the pan (2) and is practically subject to no torsion when the lid occupies an open position after the release of the bolt,
**characterised in that** the hinge is equipped with at least one braking device comprising first (8) and second (9) concentric parts disposed concentrically to the spring (5), resting respectively on the two end coils (10; 11) of the spring and provided with mutual coupling members (16; 17), the first part (8) being connected during rotation with the free end (6) of the spring and the second part (9) being connected to the fixed end (7) of said spring, the said mutual coupling members having respectively bearing surfaces (12; 13) with complementary profiles, cooperating by friction damping the resilience of spring (5), disposed transversally to the pin (3) and capable of moving progressively along an ascending slope in the rotational direction of the opening of the lid, **and in that** said mutual coupling members (16, 17) are capable of moving one of the parts axially, at least in the final travel of the lid (1), with respect to the other, against the increasing opposed force resulting from the compression of the spring (5) by said parts (8; 9).

2. A hinge according to Claim 1,
**characterised in that** the first (8) and second (9) parts are respectively two tubular parts, each of which comprises a base (14; 15) resting on one of the end coils (10; 11) of the spring and the free edges of which bear mutual coupling members which comprise respectively on the first (8) and second (9) parts a pair of outwardly directed radial hooks (16) diametrically opposite with respect to the pin (3) and a pair of inwardly directed radial catches (17), which are also diametrically opposite with respect to the tooth pin (3) and which fit one beneath the other by their adjacent face, **and in that** the bearing surfaces (12; 13) are formed by cams formed respectively on at least one of said two pairs of catches (17) and hooks (16).

3. A hinge according to Claim 2,
**characterised in that** the two catches (17) extend respectively along two circle sectors concentric to the pin (3) and the two hooks (16) also extend along two circle sectors concentric to said pin, the angular sectors (18) situated between the catches (17) having an angular range which is greater than the angular range of the hooks (16), so as to permit a bayonet mounting of the first (8) and second (9) parts.

4. A hinge according to Claim 2 or 3,
**characterised in that** on their adjacent faces the two pairs of catches (17) and hooks (16) respectively bear cams (12, 13).

5. A hinge according to any one of Claims 2 to 4,
**characterised in that** the first tubular part (8) comprises in the central region of its base a tubular axial hub (19) which is mounted around the pin (3) and the end of which protrudes so as to form by its external face a bearing (20) for the second tubular part (9), the base (15) of which has a central aperture (21) for the passage of the hub (19).

6. A hinge according to any one of the preceding Claims,
**characterised in that** it comprises two springs (5) spaced from one another and joined by their fixed ends (7) to form a U-shaped wire foot which comes to be movably fixed in a housing (22) provided between the outer wall of the pan (2) and a hinge-bearing lateral support (23), the said foot coming to grip a boss (24) borne by the internal face of the support (23).

7. A hinge according to Claim 6,
**characterised in that** the bearing (4) for housing the pin (3) is open at the top in order to keep said pin under traction on this bearing by means of the wire foot (7) which grips the boss (24).

## Patentansprüche

1. Scharnier für einen Deckel (1) eines Behälters (2) eines Kochgerätes, wie beispielsweise einer Friteuse, das eine Achse (3) aufweist, die in einem Lager (4) horizontal angeordnet ist, das mit dem Behälter (2) fest verbunden ist, und um welche der Deckel (1) geschwenkt wird, sowie wenigstens eine Schraubenfeder (5) mit unverbundenen Windungen aufweist, die konzentrisch zur Achse (3) angeordnet ist und deren sogenanntes freies Ende (6) an dem Deckel (1) befestigt ist und deren anderes sogenanntes festes Ende (7) mit der Wand des Behälters (2) derart verbunden ist, daß die Feder (5), wenn der Deckel (1) mittels eines mit dem Behälter (2) fest verbundenen Riegels in Schließposition gehalten wird, unter Torsionsspannung steht und praktisch ohne Torsionsspannung ist, wenn der Deckel nach Öffnen des Riegels eine offene Position einnimmt, **dadurch gekennzeichnet**, daß das Scharnier mit wenigstens einer Bremsvorrichtung ausgerüstet ist, die ein erstes (8) und ein zweites (9) konzentrisches Teil aufweist, welche konzentrisch zu der Feder (5) angeordnet sind, jeweils auf die beiden Endwindungen (10; 11) der Feder drücken und Elemente zur wechselweitigen Ankupplung (16; 17) aufweisen, wobei das erste Teil (8) zur Drehung mit dem freien Ende (6) der Feder verbunden ist und das zweite Teil (9) mit dem festen Ende (7) der Feder (5) verbunden ist, wobei die Elemente zur wechselseitigen Ankupplung (16; 17) jeweils Anschläge (12; 13) mit komplementären Profilen aufweisen, die mittels Reibung zusammenwirken, um die Entspannung der Feder (5) zu dämpfen, quer zur Achse (3) angeordnet und dazu geeignet sind, sich fortlaufend gemäß einer zunehmenden Steigung in Drehrichtung des Deckels beim Öffnen zu drehen, und dadurch, daß die Elemente zur wechselseitigen Ankupplung (16; 17) dazu geeignet sind, wenigstens bei der Endbewegung des Deckels (1) das eine Teil gegen das andere entgegen der zunehmenden Gegenkraft axial zu verschieben, die durch die Kompression der Feder (5) durch die Teile (8; 9) verursacht wird.

2. Scharnier gemäß Anspruch 1, **dadurch gekennzeichnet**, daß das erste (8) und das zweite (9) Teil jeweils zwei rohrförmige Teile sind, von denen jedes einen Boden (14; 15) aufweist, der gegen eine der Endwindungen (10; 11) der Feder (5) drückt, und deren freie Enden die Elemente zur wechselseitigen Ankupplung aufweisen, die jeweils auf dem ersten (8) und dem zweiten (9) Teil ein Paar radiale, nach außen gerichtete und bezüglich der Achse (3) diametral gegenüberliegende Greiferelemente (16) und ein Paar radiale nach innen gerichtete und gleichermaßen bezüglich der Achse (3) diametral gegenüberliegende Rastenelemente (17) aufweisen, und von denen sich die einen sich mit ihren angrenzenden Flächen unter die anderen einfügen, und dadurch, daß die Anschläge (12; 13) von Nocken gebildet sind, die jeweils an mindestens einem der beiden Paare der Rastenelemente (17) und der Greiferelemente (16) ausgebildet sind.

3. Scharnier gemäß Anspruch 2, **dadurch gekennzeichnet**, daß sich die beiden Rastenelemente (17) jeweils entlang zweier zur Achse (3) konzentrischer Kreissektoren erstrecken und die beiden Greiferelemente (16) sich gleichermaßen entlang zweier zu dieser Achse konzentrischer Kreissektoren erstrecken, wobei die von den Rastenelementen (17) eingeschlossenen Kreissektoren (18) eine größere Winkelausdehnung aufweisen als die Winkelausdehnung der Greiferelemente (16), so daß ein bajonettartiges Zusammenfügen des ersten Teils (8) und des zweiten Teils (9) möglich ist.

4. Scharnier gemäß Anspruch 2 oder 3, **dadurch gekennzeichnet**, daß die beiden Paare der Rastenelemente (17) und der Greiferelemente (16) jeweils auf ihren aneinandergrenzenden Flächen die Nocken (12; 13) aufweisen.

5. Scharnier gemäß einem der Ansprüche 2 bis 4, **dadurch gekennzeichnet**, daß das erste rohrförmige Teil (8) im Mittel bereich seines Bodens eine axiale rohrförmige Nabe (19) aufweist, die auf die Achse (3) Aufgeschoben ist und deren Ende derart vorsteht, daß durch ihre äußere Fläche ein Lager (20) für das zweite rohrförmige Teil (9) gebildet wird, dessen Boden (15) eine Mittelbohrung (21) für den Durchtritt der Nabe (19) aufweist.

6. Scharnier gemäß einem der vorangegangenen Ansprüche, **dadurch gekennzeichnet**, daß es zwei Federn (5) aufweist, die zueinander beabstandet sind und über ihre festen Enden (7) vereinigt sind, um einen U-förmigen Drahtbügel zu bilden, der in einer Aufnahme (22) unbeweglich gehalten ist, die zwischen der Außenwand des Behälters (2) und einem seitlichen Scharnierträger (23) gebildet ist, wobei der Bügel einen Vorsprung (24) einspannt, der an der Innenfläche des Scharnierträgers (23) vorgesehen ist.

7. Scharnier gemaß Anspruch 6, **dadurch gekennzeichnet**, daß das Lager (4) zur Aufnahme der Achse (3) nach oben hin derart offen ist, daß die Achse auf dem Lager durch den Drahtbügel (7), der den Vorsprung (24) einspannt, unter mechanischem Zug gehalten wird.
